# EUROPÄISCHE PATENTSCHRIFT

(11) **EP 0 613 517 B1**
(45) Veröffentlichungstag und Bekanntmachung des Hinweises auf die Patenterteilung: **20.03.1996**
(21) Anmeldenummer: 93900026.1
(22) Anmeldetag: 20.11.1992
(51) Int. Cl.: F01K 7/34, H02J 15/00

(54) **DAMPFKRAFTWERK, VERFAHREN ZU SEINEM BETRIEB UND VERBUNDNETZ**
STEAM GENERATING POWER STATION, PROCESS FOR OPERATING THE SAME AND INTERLINKING NETWORK
CENTRALE THERMIQUE A VAPEUR, SON PROCEDE D'EXPLOITATION ET RESEAU D'INTERCONNEXION

(30) Priorität: 21.11.1991 DE 4138264
(43) Veröffentlichungstag der Anmeldung: 07.09.1994
(73) Patentinhaber: SIEMENS AKTIENGESELLSCHAFT, D-80333 München (DE); PreussenElektra Aktiengesellschaft, D-30457 Hannover (DE)
(72) Erfinder: KÜRTEN, Heribert, D-8525 Uttenreuth (DE); RADTKE, Uwe, D-3003 Ronnenberg 3 (DE); TAUBE, Wolfgang, D-2105 Seevetal 2 (DE); VOLLMAR, Horst, D-8522 Herzogenaurach-Haundorf (DE)
(74) Vertreter: Fuchs, Franz-Josef, Dr.-Ing.
(86) Internationale Anmeldenummer: EP9202681
(87) Internationale Veröffentlichungsnummer: WO9310334

(56) Entgegenhaltungen:
- IEEE TRANSACTIONS ON POWER SYSTEMS Bd. 7, Nr. 3, August 1992, NEW YORK US Seiten 1266 - 1273 TRIPATHY 'EFFECT OF SUPERCONDUCTING MAGNETIC ENERGY STORAGE ON AUTOMATIC GENERATION CONTROL'
- G.KLEFENZ 'Die Regelung von Dampfkraftwerken' 1983 , BIBLIOGRAFISCHES INSTITUT
- , MANNHEIM DE

## Beschreibung

Die Erfindung bezieht sich auf ein Dampfkraftwerk mit einer einen Generator antreibenden Dampfturbine und einer an der Dampfturbine angeschlossenen Dampfanzapfleitung. Die Erfindung bezieht sich auch auf ein Verfahren zum Betrieb eines Dampfkraftwerks und auf ein Verbundnetz, an das eine Anzahl von Dampfkraftwerken angeschlossen ist. Ferner bezieht sich die Erfindung auf ein Verfahren zum Betrieb des Verbundnetzes.

Dampfkraftwerke der eingangs genannten Art sind allgemein üblicher Stand der Technik.

In größeren Stromversorgungssystemen stellt sich die Aufgabe, gewisse Energiemengen für die Vorhaltung der sogenannten "Sekunden-Reserve-Leistung" zu speichern. Diese Aufgabe entspringt der Notwendigkeit, in diesem System quasi spontan aktivierbare elektrische Leistung ständig für den Fall bereitzuhalten, daß plötzlich unvorhersehbare Leistungsdefizite, zum Beispiel durch einen Kraftwerksausfall, entstehen.

Im UCPTE-Netz (europäisches Verbundnetz) muß jedes Unternehmen 2,5 % der momentanen Netzlast als "Sekunden-Reserve-Leistung" vorhalten. In der Bundesrepublik Deutschland muß diese "Sekunden-Reserve-Leistung" zur Hälfte innerhalb von 5 Sekunden und der Rest in weiteren 25 Sekunden aktivierbar sein, um ein Leistungsdefizit im öffentlichen Netz ausgleichen zu können. Die Vorhaltung der "Sekunden-Reserve-Leistung" erfolgt heute überwiegend durch verlustbehaftete Androsselung der Turbinen-Stellventile in den Dampfkraftwerken, die in das Verbundnetz einspeisen. Solche Dampfkraftwerke werden also gedrosselt betrieben. Bei einer netzseitigen Lastspitze, oder anders ausgedrückt: bei einem Defizit der insgesamt eingespeisten Kraftwerksleistung, wird diese Androsselung zurückgenommen, so daß die Leistung der Dampfkraftwerke entsprechend gesteigert wird. Es ist eine Eigenart der Androsselung, daß wegen des etwas verringerten Wirkungsgrades die Betriebskosten des einzelnen Kraftwerks entsprechend steigen. Darüber hinaus hat diese Art des Ausgleichs des Leistungsdefizits zur Folge, daß die einzelnen Dampfkraftwerke etwas leistungsstärker gebaut werden müssen, als dies sonst der Fall sein würde. Dadurch erhöhen sich auch die Investitionskosten. Wünschenswert wäre es, wenn die Androsselung vermieden werden könnte, damit auch die Betriebs- und Investitionskosten klein gehalten werden können.

Zum Ausgleich von Leistungsdefiziten im Bereich von 30 Sekunden bis 5 und mehr Minuten Dauer ist es schon bekannt, die Dampfversorgung der mit Anzapfdampf beheizten Speisewasservorwärmer kurzfristig zu unterbinden, also eine Vorwärmer-Abschaltung vorzunehmen (VGB Kraftwerkstechnik 60, Heft 1, Januar 1980, Seiten 18 bis 23). Durch diese Maßnahme steht der Dampfturbine sofort eine vergrößerte Dampfmenge zur Verfügung. Die dadurch gewonnene Zeit reicht dann meist aus, um die Heizleistung im Dampferzeuger bis an die zulässige Grenzleistung hochzufahren, wenn mit längeren Lastspitzen gerechnet wird, oder um Pumpspeicherkraftwerke oder Gasturbinenkraftwerke zu aktivieren. Die Ausregelung von Lastspitzen durch kurzzeitiges Schließen des Ventils in der Anzapfdampfleitung führt zu keiner Erhöhung der Betriebskosten. Es ist jedoch eine Eigenart dieser Art der Ausregelung von Lastspitzen, daß sie mit einer Verzögerungszeit anspricht, die je nach Art des Kraftwerks im Bereich von 20 bis 40 Sekunden liegt. Sie eignet sich daher nicht dazu, Lastspitzen so schnell auszugleichen, daß es nicht zu einem Leistungseinbruch oder einem Frequenzabfall kommt. Unter Lastspitzen werden hier insbesondere plötzliche, unvorhersehbare Leistungsdefizite auf der Stromerzeugerseite verstanden, wie sie zum Beispiel durch Kraftwerksausfälle entstehen. Lastspitzen, wie sie durch plötzliches Zuschalten von Großverbrauchern entstehen, haben - im Gegensatz zu Inselnetzen mit wenigen Kraftwerken - in großen Verbundnetzen, wie dem europäischen Verbundnetz, nur eine untergeordnete Bedeutung.

Es ist weiter bekannt, in der elektrischen Energieversorgung supraleitende magnetische Energiespeicher (SMES) einzusetzen (BWK, Band 40 (1988), Nr. 9, Seiten 353 bis 360, insbesondere Bild 10, und "Elektrizitätswirtschaft", Jg. 89 (1990), Heft 3, Seiten 111 bis 115). Damit können Leistungsschwankungen im elektrischen Netz kompensiert werden. Damit kann auch der Spitzenbedarf in einem Netz abgedeckt werden, und zwar bis über mehrere Stunden. Solche SMES sind aber bisher noch nicht zur Bereitstellung der Sekunden-Reserve-Leistung in Betracht gezogen worden, wo es darum geht, hohe Leistungen in einem relativ kurzen Zeitraum für ein Verbundnetz verfügbar zu haben.

Der Erfindung liegt die Aufgabe zugrunde, einen Weg zu weisen, wie solche Lastspitzen oder Leistungsdefizite ausgeregelt oder ausgeglichen werden können, ohne daß auf die verlustbehaftete Androsselung zurückgegriffen werden muß. Dabei soll also die Ausregelung der Lastspitzen mit nur geringen Betriebskosten und mit geringen zusätzlichen Investitionskosten erreicht werden. Es sollen ein hierfür geeignetes Dampfkraftwerk und ein hierfür geeignetes Verfahren angegeben werden. Insbesondere soll also die Sekunden-Reserve-Leistung zu erschwinglichen Kosten bereitgestellt werden. Darüber hinaus sollen ein geeignetes Verbundnetz und ein Verfahren zu seinem Betrieb angegeben werden, die die genannte Forderung erfüllen.

Bezüglich des Dampfkraftwerks wird die genannte Aufgabe erfindungsgemäß dadurch gelöst, daß ein Dampfkraftwerk mit
a) einer einen Generator antreibenden Dampfturbine,
b) einer an der Dampfturbine angeschlossenen Dampfanzapfleitung mit einem lastabhängig einstellbaren Ventil,
c) einer Anlage mit einem elektrisch parallel zum Generator angeschlossenen supraleitenden magnetischen Energiespeicher, und
d) einer Kontrolleinheit,
vorgesehen ist, bei dem zur Ausregelung von im Sekundenbereich auftretenden Leistungsdefiziten eines am Generator angeschlossenen Netzwerkes mittels der Kontrolleinheit unmittelbar elektrische Leistung aus dem supraleitenden Energiespeicher bereitstellbar ist, und zugleich mittels der Kontrolleinheit das Ventil zur Vermehrung des Dampfangebotes an der Dampfturbine einstellbar ist.

Bezüglich des Verfahrens wird die genannte Aufgabe erfindungsgemäß dadurch gelöst, daß im Sekundenbereich auftretende Leistungsdefizite im Netz mittels einer Kontrolleinheit netzabhängig, d. h. abhängig von dem am Netz erfaßbaren Leistungsdefizit, durch unmittelbare Bereitstellung von in einem supraleitenden magnetischen Energiespeicher gespeicherter Energie ausgeregelt werden, und daß zugleich ein Ventil in einer Anzapfdampfleitung zur Verstärkung des Dampfangebotes an der Dampfturbine mittels der Kontrolleinheit eingestellt wird.

Bezüglich des Verbundnetzes mit einer Anzahl von Dampfkraftwerken wird die genannte Aufgabe erfindungsgemäß dadurch gelöst, daß das Verbundnetz mindestens ein Dampfkraftwerk ein mittels einer Kontrolleinheit einstellbares und in einer Anzapfdampfleitung eingebautes Ventil umfaßt, und daß mindestens einem Dampfkraftwerk ein supraleitender magnetischer Speicher zugeordnet ist, bei dem zur Ausregelung von im Sekundenbereich auftretenden Leistungsdefiziten mittels der Kontrolleinheit unmittelbar elektrische Leistung aus dem supraleitenden magnetischen Speicher bereitstellbar ist und mittels der Kontrolleinheit zur Vermehrung des Dampfangebotes an der Dampfturbine cas Ventil einstellbar ist.

Bezüglich des Verfahrens zum Betrieb des Verbundnetzes wird die genannte Aufgabe erfindungsgemäß dadurch gelöst, daß bei Auftreten eines Leistungsdefizits, beispielsweise infolge des Ausfalls eines der Dampfkraftwerke, der supraleitende magnetische Energiespeicher zwecks Einspeisung in das Verbundnetz aktiviert wird, und daß in den restlichen Dampfkraftwerken eine Vermenrung des Dampfangebotes in den Dampfturbinen, beispielsweise durch eine Vorwärmer-Abschaltung, eingestellt wird.

Weitere vorteilhafte Ausgestaltungen der Erfindung sind den Unteransprüchen zu entnehmen.

Wie gesagt, zur Ausregelung von schnell und unvermittelt auftretenden Lastspitzen oder Leistungsdefiziten ist die Anlage mit einem supraleitenden magnetischen Energiespeicher am Netz parallel zum Generator angeschlossen, und in der Anzapfdampfleitung ist das lastabhängig einstellbare Ventil eingebaut. Dadurch wird die Möglichkeit geschaffen, ein kurzzeitiges Leistungsdefizit (Lastspitze) in einem Verbundnetz im Sekundenbereich über den supraleitenden Energiespeicher auszugleichen. Darüber hinaus kann durch gleichzeitiges Schließen des Ventils in der Anzapfdampfleitung die Dampfturbinenleistung erhöht werden, um bei länger andauerndem Leistungsdefizit (Lastspitze) eine etwas erhöhte Generatorleistung anzubieten und den supraleitenden magnetischen Energiespeicher nach dem Abklingen des Leistungsdefizits (der Lastspitze) wieder aufzuladen. Durch diese Art der ausregelung kann der überwiegende Teil der Leistungsdefizite (Lastspitzen) im elektrischen Netz ohne nennenswerte Verringerung des Wirkungsgrades und mit nur geringer Erhöhung der Betriebskosten ausgeglichen werden. Wichtig ist also die Kombination aus Entladung des supraleitenden Energiespeichers mit der Verstärkung des Dampfangebotes an der Dampfturbine, z. B. mit der Abschaltung des Vorwärmers über das einstellbare Ventil.

Wie weiter gesagt, werden kurzzeitige Lastspitzen im Sekundenbereich mittels des netzabhängig geregelten Umformers durch automatische Bereitstellung von im supraleitenden magnetischen Energiespeicher gespeicherter Energie ausgeregelt, und zugleich wird das Ventil in der Anzapfleitung zur Verstärkung des Dampfangebots an der Dampfturbine geschlossen. Dadurch wird eine automatische Ausregelung von Lastspitzen im Sekundenbereich erreicht, die mit nur geringer Erhöhung der Betriebskosten verbunden ist. Das hat auch zur Folge, daß bei Inselnetzen auf eine Überdimensionierung des Kraftwerkes zur Ausregelung von Lastspitzen weitgehend verzichtet werden kann. Dadurch verringern sich die Investitionskosten beträchtlich. Darüber hinaus wird so auch die Frequenzregelung und die Blindleistungskompensation erleichtert. Auf diese Weise läßt sich auch eine Stabilisierung des elektrischen Netzes sowie die Ausregelung von Stoßbelastungen aller Art beim plötzlichen Einschalten von Großverbrauchern erreichen.

In besonders zweckmäßiger Ausgestaltung der Erfindung kann die Anlage zur supraleitenden magnetischen Energiespeicherung zur Bereitstellung der Sekunden-Reserve-Leistung einen Regler enthalten, der den Umformer in Abhängigkeit von der Last im elektrischen Netz im Sinne einer Ausregelung der positiven und negativen Leistungsdefizite, das heißt der netzseitigen Lastspitzen und Lasttäler, steuert. Hierdurch wird ein im Zehntelsekundenbereich liegender Ausgleich von Lastspitzen und -tälern ermöglicht.

In besonders vorteilhafter Weiterbildung der Erfindung kann das Ventil in der Anzapfdampfleitung in Abhängigkeit von netzseitigen Lastspitzen schließbar sein. Auf diese Weise wird durch die Lastspitze selbst unmittelbar die Bereitstellung einer Leistungsreserve auch in der Dampfturbine in Gang gesetzt. Dies hat zur Folge, daß bei längerem Andauern der Lastspitze eine etwas erhöhte Generatorleistung zur Verfügung steht.

Es hat sich als besonders vorteilhaft erwiesen, wenn in der Anlage zur supraleitenden magnetischen Energiespeicherung eine Magnetspule vorgesehen ist, die ein metallisches supraleitendes Material, etwa eine Niob-Titan-Legierung oder eine Nb₃Sn-Legierung, umfaßt und die über eine Leitung aus einem hochtemperatursupraleitenden Material, etwa Y₁Ba₂Cu₃Oₓ, an eine weiterführende normalleitende elektrische Leitung angeschlossen ist. Durch diese Maßnahme wird der Arbeitswiderstand der Anlage zur supraleitenden magnetischen Energiespeicherung verringert. Außerdem wird auch die Überleitung von ohm'scher Verlustwärme im Betrieb aus dem nicht-supraleitenden Bereich in den Bereich mit Tieftemperatursupraleitung vermindert, weil der normal-leitende Bereich nicht mehr unmittelbar an den tieftemperatursupraleitenden Abschnitt angrenzt und in dem Bereich der Hochtemperatursupraleitung keine ohm'schen Verluste entstehen.

Weitere Ausgestaltungen der Erfindung werden anhand von drei Figuren näher erläutert. Es zeigen:
Figur 1 ein Ausführungsbeispiel eines Dampfkraftwerks mit Bereitstellung einer geforderten Sekunden-Reserve-Leistung,
Figur 2 ein Zeitdiagramm und
Figur 3 ein Verbundnetz mit einer Vielzahl von Dampfkraftwerken.

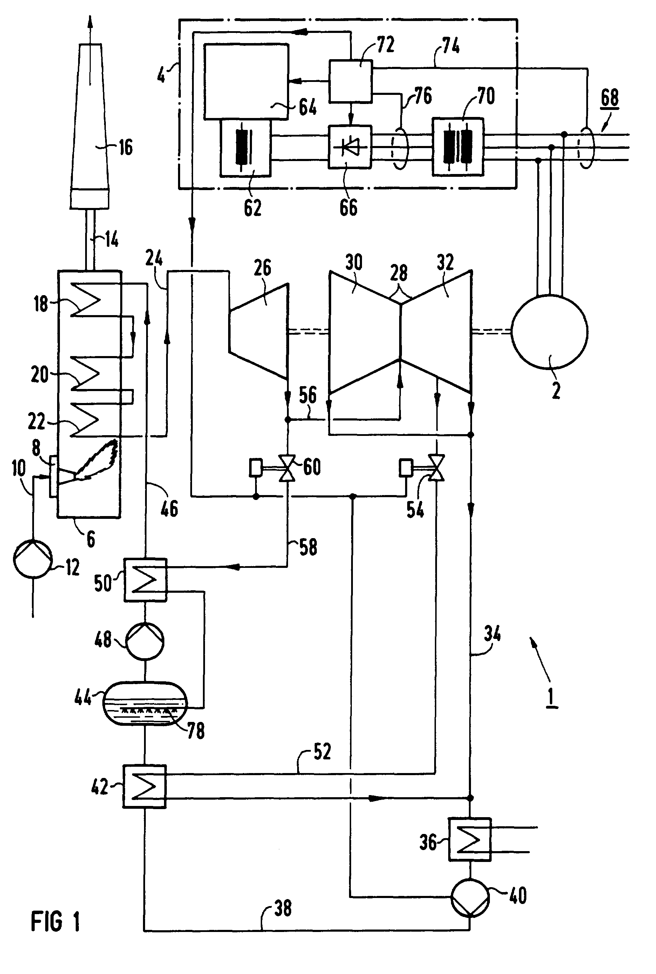

Figur 1 zeigt eine schematische Darstellung eines erfindungsgemäßen Dampfkraftwerks 1 mit einer parallel zum Generator 2 geschalteten Anlage 4 zur supraleitenden magnetischen Energiespeicherung. Das Dampfkraftwerk 1 umfaßt im Ausführungsbeispiel einen fossilbeheizten Dampferzeuger 6 mit einem im unteren Bereich des Dampferzeugers 6 angeordneten Brenner 8, welcher über eine Brennstoffleitung 10 mit einer Brennstoffpumpe 12 verbunden ist, und mit einer an dem Dampferzeuger 6 angeschlossenen Rauchgasleitung 14, die in einen Schornstein 16 führt. Im Dampferzeuger 6 sind Economizer-Heizflächen 18, Verdampferheizflächen 20 und Überhitzerheizflächen 22 angedeutet. An der den Dampferzeuger 6 verlassenden Hochdruckdampfleitung 24 ist eine Hochdruckdampfturbine 26 und in Serie zu dieser eine zweiflutige Niederdruckdampfturbine 28 angeschlossen. Die beiden Niederdruckstufen 30,32 der Niederdruckdampfturbine 28 sind über eine Abdampfleitung 34 an einen Kondensator 36 angeschlossen. Der Kondensator 36 ist ausgangsseitig mit einer Kondensatleitung 38 verbunden, in der in Serie eine Kondensatpumpe 40, ein Kondensatvorwärmer 42 und ein Speisewasserbehälter 44 geschaltet sind. Der Speisewasserbehälter 44 ist wiederum seinerseits ausgangsseitig an eine Speisewasserleitung 46 angeschlossen, in der in Serie eine Speisewasserpumpe 48, ein Speisewasservorwärmer 50, die Economizer-Heizflächen 18 und die Verdampferheizflächen 20 des Dampferzeugers 6 geschaltet sind. Die Verdampferheizflächen 20 des Dampferzeugers 6 münden ausgangsseitig in die Überhitzerheizflächen 22 und diese wiederum in die Hochdruckdampfleitung 24 des Dampferzeugers 6.

An der in der Figur rechten Niederdruckstufe 32 der Niederdruckdampfturbine 28 ist eine Anzapfdampfleitung 52 angeschlossen, die über eine Drosselklappe oder ein Stellventil 54 in die Heizflächen des Kondensatvorwärmers 42 und von dort an den Eingang des Kondensators 36 führt. Von der von der Hochdruckdampfturbine 26 zur Niederdruckdampfturbine 28 führenden Niederdruckdampfleitung 56 ist im Ausführungsbeispiel eine weitere Anzapfdampfleitung 58 abgezweigt, die ihrerseits wiederum über eine weitere Drosselklappe oder ein weiteres Stellventil 60 in die Heizflächen des Speisewasservorwärmers 50 und von dort in den Speisewasserbehälter 44 führt. Die Einrichtungen 52, 54 und 58, 60 können, wie sich später ergeben wird, jeweils als Einrichtung zur Vorwärmer-Abschaltung bezeichnet werden.

Die Anlage 4 zur supraleitenden magnetischen Energiespeicherung ist parallel zum Generator 2 des Dampfkraftwerkes 1 am elektrischen Drehstromnetz 68 angeschlossen. Sie umfaßt eine supraleitende Magnetspule 62, eine die Magnetspule 62 kühlende Kälteanlage 64, einen an der Magnetspule 62 angeschlossenen Stromrichter oder Umformer 66, zum Beispiel mit Thyristoren, einen den Umformer 66 mit dem Drehstromnetz 68 verbindenden Transformator 70 und einen als Kontrolleinheit ausgestalteten Regler 72, der den Umformer 66, die Kälteanlage 64, die Kondensatpumpe 40 und die Stellventile 60, 54 des Dampfkraftwerks 1 einstellt. Der Regler 72 ist im Ausführungsbeispiel mit zwei Meßleitungen 74, 76 ausgestattet, die den Stromfluß und/oder die hiervon abhängigen elektrischen Parameter, wie z. B. Frequenz, Spannung und Leistung, beidseits des Transformators 70 messen.

Beim Betrieb des Dampfkraftwerks 1 wird Brennstoff über die Brennstoffpumpe 12 in den Brenner 8 des Dampferzeugers 6 gepumpt und dort verbrannt. Die heißen Brenngase verlassen den Dampferzeuger 6, nachdem sie zuvor die Überhitzerheizflächen 22, die Verdampferheizflächen 20 und die Economizer-Heizflächen 18 aufgeheizt haben, über die Rauchgasleitung 14 und den Schornstein 16. Der aus den Überhitzerheizflächen 22 austretende Hochdruckdampf treibt die Hochdruckdampfturbine 26 an; er gelangt über die Niederdruckdampfleitung 56 in die Niederdruckdampfturbine 28 und von dort über die Abdampfleitung 34 in den Kondensator 36.

Dort wird der Dampf kondensiert, und das Kondensat wird mittels der Kondensatpumpe 40 über die Kondensatleitung 38 durch den Kondensatvorwärmer 42 in den Speisewasserbehälter 44 gepumpt. Das Wasser des Speisewasserbehälters 44 wird über die Speisewasserpumpe 48 durch die Speisewasserleitung 46 in den Speisewasservorwärmer 50 und von dort in die Economizer-Heizflächen 18 und Verdampferheizflächen 20 gedrückt.

Im Normalbetrieb, wenn die Reserve-Leistung nicht benötigt wird, wird zur Verbesserung des Wirkungsgrades Anzapfdampf von der Niederdruckstufe 32 der Niederdruckdampfturbine 28 über das Stellventil 54 in die Heizflächen des Kondensatvorwärmers 42 und von dort in den Kondensator 36 geleitet. Hierdurch wird das in den Speisewasserbehälter 44 einströmende Kondensat vorgewärmt. Eine weitere Vorwärmung erhält das Speisewasser durch Niederdruckdampf, der hinter der Hochdruckdampfturbine 26 von der Niederdruckdampfleitung 56 abgezweigt wird und über die Anzapfleitung 58 und das zweite Stellventil 60 in die Heizflächen des Speisewasservorwärmers 50 und von dort in den Speisewasserbehälter 44 geleitet wird. Dort strömt der Anzapfdampf aus unter der Wasseroberfläche befindlichen Dampfaustrittsdüsen 78 aus. Hierdurch wird der gesamte Wärmeinhalt des aus der Niederdruckdampfleitung 56 entnommenen Anzapfdampfes zur Aufheizung des Speisewassers vor dessen Einleitung in die Economizer-Heizflächen 18 verwendet. Die weitere Aufheizung, Verdampfung und Überhitzung übernehmen dann die Rauchgase im Dampferzeuger 6.

Über den von der Hochdruck- und Niederdruckdampfturbine 26, 28 angetriebenen Generator 2 wird elektrischer Strom in das Drehstromnetz 68 gespeist. Hierbei handelt es sich insbesondere um ein Verbundnetz. Die Anlage 4 zur supraleitenden magnetischen Energiespeicherung ist - wie erwähnt - parallel zum Generator 2 des Dampfkraftwerks 1 am elektrischen Drehstromnetz 68 angeschlossen.

Über die Meßleitung 74 stellt der Regler 72 Leistungsdefizite oder Lastüberschreitungen im Netz 68 fest. Dabei kann es sich um den Ausfall eines weiteren Kraftwerks handeln, das in das Netz 68 eingespeist hat. In diesem Fall kann der Regler 72 in an sich vorbekannter Weise den Umformer 66 so steuern, daß die Lastspitzen sofort durch in der supraleitenden Spule 62 gespeicherte Energie ausgeglichen oder ausgeregelt werden. Dabei kann diese Regelung so schnell sein, daß Laständerungen innerhalb von 0,1 Sekunden ausgeregelt werden. Bei nicht voll ausgelastetem Netz 68 kann der Regler 72 den Umformer 66 so steuern, daß Energie aus dem Drehstromnetz 68 solange in die supraleitende Spule 62 eingespeist wird, bis der supraleitende elektrische Energiespeicher 62 wieder voll aufgeladen ist. Dabei wird die dem elektrischen Netz 68 zugeführte oder die vom elektrischen Netz 68 abgeführte Leistung über die Meßleitung 76 erfaßt.

Im Ausführungsbeispiel, bei dem die Anlage 4 zur supraleitenden magnetischen Energiespeicherung im Dampfkraftwerk 1 eingebaut ist, steuert der Regler 72 bei Überlast oder Auftreten eines Leistungsdefizits im Netz 68 zugleich auch die beiden Regelventile 54,60 in den beiden Anzapfleitungen 52,58 des Dampfkraftwerks 1 zu; er schaltet auch die Kondensatpumpe 40 ab. Dies hat zur Folge, daß an der Niederdruckdampfturbine 28, je nach Bauart des Dampfkraftwerks 1, innerhalb von 20 bis 40 Sekunden mehr Dampf zur Verfügung steht, so daß der Generator 2 vermehrt Energie ins elektrische Drehstromnetz 68 abgeben kann. Bei nachlassender Leistungsnachfrage im elektrischen Netz 68 werden dann die beiden Ventile 54, 60 in den beiden Anzapfdampfleitungen 52,58 wieder aufgesteuert; die Kondensatpumpe 40 wird wieder eingeschaltet, und über den Drehstromtransformator 70 und den Umformer 66 wird erneut elektrische Energie in den supraleitenden magnetischen Energiespeicher 62 eingespeist.

Es ist ein großer Vorteil einer solchen Kombination der Unterbrechung der Zufuhr von Anzapfdampf zur Beheizung des Speisewasservorwärmers 6 mit einer als Energiespeicher wirkenden Anlage 4 zur supraleitenden magnetischen Energiespeicherung, daß die im Sekundenbereich fehlende elektrische Leistung nachgeschoben und dadurch jene Zeit überbrückt werden kann, bis zu der die beiden Regelventile 54, 60 in den Anzapfdampfleitungen 52, 58 geschlossen werden und die erforderliche zusätzliche elektrische Leistung über die Niederdruckdampfturbine 28 ins elektrische Netz 68 eingespeist werden kann. Die Unterbrechung der Zufuhr von Anzapfdampf und die Abschaltung der Kondensatpumpe 40 kann ohne nennenswerte Nachteile etwa 5 Minuten lang durchgehalten werden. Die Unterbrechung wird jedoch erst mit einer Zeitverzögerung wirksam, die je nach Kraftwerk 1 zwischen 20 und 40 Sekunden liegt, so daß sie für sich allein einen kurzzeitigen Spannungseinbruch bei Lastspitzen nicht vermeiden kann. Durch die erfindungsgemäße Kombination der Unterbrechung der Zufuhr von Anzapfdampf für die Speisewasseraufheizung mit der Anlage 4 zur supraleitenden magnetischen Energiespeicherung können dagegen Lastspitzen im Bereich von 0,1 Sekunden bis 5 Minuten Dauer ausgeregelt werden. Dieses Zeitintervall reicht aus, um bei länger andauernder Überlast andere zur Minutenreserve gehörende Energieträger, wie Pumpspeicherkraftwerke oder Gasturbinenkraftwerke, anlaufen zu lassen.

Es ist ein weiterer großer Vorteil der erfindungsgemäßen Kombination der Unterbrechung der Entnahme von Anzapfdampf mit der Anlage 4 zur supraleitenden magnetischen Energiespeicherung, daß auch Instabilitäten im Netz 68, wie sie durch Stoßbelastung etwa durch das Anfahren von großen Maschinen, wie z.B. von Walzstraßen, entstehen, aufgefangen und ausgeglichen werden können.

Bisher wurde von einer Betriebsweise ausgegangen, bei der der supraleitende magnetische Energiespeicher 62 in Zeiten ausreichender Kraftwerksleistung nach Möglichkeit maximal aufgeladen wird, um in Zeiten unzureichender Kraftwerksleistung über genügend Energie zu verfügen, um Leistungsdefizite ausgleichen zu können. Es ist aber auch möglich, den Regler 72 so einzustellen, daß der supraleitende magnetische Energiespeicher 62 in Zeiten überschüssiger Kraftwerksleistung Energie aus dem Netz 68 herausnimmt und sich dabei nur etwa zu Hälfte auflädt, und daß er in Zeiten unzureichender Kraftwerksleistung elektrische Energie in das Netz 68 einspeist. Dabei geschieht sowohl die Energieaufnahme als auch die Energieabnahme im Bereich von wenigen Sekunden. Sie dienen dazu, ohne Leistungseinbruch oder Leistungsexkurs die Zeit zu überbrücken, bis die anderen Regelmechanismen, wie z.B. die Zu- oder Abschaltung der mit Anzapfdampf beheizten Speisewasservorwärmer 42, 44, 50, sich ausgewirkt haben. Die letztgenannte Betriebsweise erfordert - so vorteilhaft sie auch ist - eine vergleichsweise doppelt so große Speicherkapazität, weil der Energiespeicher 62 im Mittel nur halb geladen ist.

Es ist nicht unbedingt erforderlich, daß die Anlage 4 zur supraleitenden magnetischen Energiespeicherung unmittelbar in das Dampfkraftwerk 1 integriert ist, so wie das im Ausführungsbeispiel gezeigt wird. Es ist auch denkbar, daß die Anlage 4 zur supraleitenden magnetischen Energiespeicherung in einiger Entfernung vom Kraftwerk 1, z.B. in der Nähe eines Netzknotenpunktes oder in der Nähe eines Verbrauchers, der kurzzeitige Stoßbelastungen erzeugt, aufgestellt wird. In diesem Fall müssen aber die Ventile 54, 60 für die Anzapfdampfleitungen 52, 58 des Dampfkraftwerkes 1 entweder von einer separaten Kontrolleinheit oder von dem Regler 72 der entfernt aufgestellten Anlage 4 zur supraleitenden magnetischen Energiespeicherung ferngesteuert werden.

Die bevorzugte Speicherleistung einer Anlage 4 zur supraleitenden magnetischen Energiespeicherung hängt im wesentlichen von der Art des Netzes 68 und von der Größe der darin vorkommenden Lastspitzen ab. Beim europäischen Verbundsystem sind Leistungsbereiche von 7 bis 700 MW und Energieinhalte des supraleitenden Energiespeichers 62 von 60 kWh bis 10 MWh vorteilhaft. Ein typisches Wertepaar ist beispielsweise eine Spitzenleistung von etwa 125 MW und ein Energieinhalt von etwa 2 MWh für ein Energieversorgungsunternehmen im europäischen Verbundnetz, das die Anforderungen bezüglich der Bereitstellung der Sekunden-Reserve-Leistung erfüllen will.

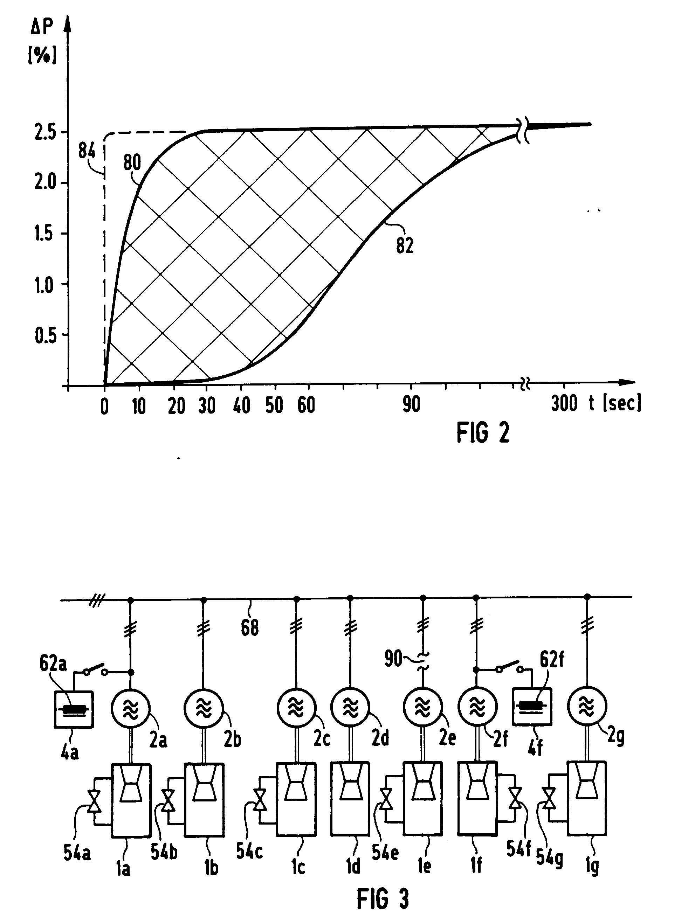

Gemäß Figur 2 kann das Kraftwerk 1 von Figur 1 nach Kurve 80 so betrieben werden, daß es die eingangs genannten Forderungen erfüllt, nämlich Abgabe von P = 1,25 % der Netzlast innerhalb von 5 Sekunden und P = 2,5 % innerhalb von 30 Sekunden. Der gestrichelte Bereich wird dabei von der Anlage 4 aufgebracht. Kurve 82 zeigt den im Laufe der Zeit t zunehmenden Beitrag der Vorwärmer-Abschaltung mittels der Ventile 54, 60. In der Praxis kann man von der Anlage 4 einen wesentlich größeren Beitrag erhalten, was durch die Kurve 84 veranschaulicht wird. Hiernach kann im Bruchteil einer Sekunde der volle Beitrag von 2,5 % von der Anlage 4 allein geliefert werden.

Gemäß Figur 3 ist an einem Verbundnetz 68 eine größere Anzahl von Kraftwerken 1a, 1b, 1c, 1d, 1e, 1f, 1g angeschlossen. Die Kraftwerke 1a bis 1g (Ausnahme: 1d) sind jeweils mit einer Einrichtung zur Vorwärmer-Abschaltung ausgerüstet, also zum Beispiel mit einem Ventil 54a bis 54g in einer Abdampfleitung, wie bei Figur 1 ausführlich erörtert. Nur den beiden Kraftwerken 1a und 1f sind Anlagen 4a, 4f mit supraleitenden magnetischen Speichern 62a, 62f zugeordnet. Zwei große Speicher sind kostengünstiger herstellbar als mehrere kleine. Bei Auftreten eines Leistungsdefizits, zum Beispiel bei einem Defekt 90 oder einem Abschalten des Kraftwerks 1e, werden die beiden Speicher 62a, 62f aktiviert, so daß sie Leistung an das Verbundnetz 68 abgeben. Gleichzeitig werden die Einrichtungen zur Vorwärmer-Abschaltung aktiviert, so daß mit einiger Verzögerung (zum Beispiel 20 bis 40 Sekunden) zusätzliche Leistung aus den intakten Kraftwerken 1a, 1b, 1c, 1d, 1f, 1g eingespeist wird.

## Patentansprüche

1. Dampfkraftwerk mit
a) einer einen Generator (2) antreibenden Dampfturbine (26, 28),
b) einer an der Dampfturbine angeschlossenen Dampfanzapfleitung (52, 58) mit einem lastabhängig einstellbaren Ventil (54, 60),
c) einer Anlage (4) mit einem elektrisch parallel zum Generator (2) angeschlossenen supraleitenden magnetischen Energiespeicher (62), und
d) einer Kontrolleinheit (72),
bei dem zur Ausregelung eines im Sekundenbereich auftretenden Leistungsdefizits eines am Generator (2) angeschlossenen Netzwerkes (68) mittels der Kontrolleinheit (72) unmittelbar elektrische Leistung aus dem supraleitenden Energiespeicher (62) bereitstellbar ist, und bei dem zugleich mittels der Kontrolleinheit (72) das Ventil (54, 60) zur Vermehrung des Dampfangebotes an der Dampfturbine (26, 28) einstellbar ist.

2. Dampfkraftwerk nach Anspruch 1,
**dadurch gekennzeichnet,** daß die Kontrolleinheit (72) so ausgebildet ist, daß unmittelbar nach Ausgleich des Leistungsdefizits die infolge der Vermehrung des Dampfangebotes bereitgestellte elektrische Energie des Generators (2) in den Energiespeicher (62) einspeisbar ist.

3. Dampfkraftwerk nach Anspruch 1 oder 2,
**dadurch gekennzeichnet,** daß die Anlage (4) zur supraleitenden magnetischen Energiespeicherung eine supraleitende Magnetspule (62) umfaßt, die über einen netzabhängig geregelten Umformer (66) und einen Transformator (70) am elektrischen Netz (68) angeschlossen ist.

4. Dampfkraftwerk nach Anspruch 3,
**dadurch gekennzeichnet,** daß die Anlage (4) zur supraleitenden magnetischen Energiespeicherung die Kontrolleinheit (72) enthält, die den Umformer (66) in Abhängigkeit von der Last im elektrischen Netz (68) im Sinne einer Ausregelung der positiven und negativen Leistungsdefizite, d.h. der netzseitigen Lastspitzen und Lasttäler, einstellt.

5. Dampfkraftwerk nach einem der Ansprüche 1 bis 4,
**dadurch gekennzeichnet,** daß das Ventil (54,60) in der Anzapfdampfleitung (52,58) in Abhängigkeit von netzseitigen Lastspitzen schließbar ist.

6. Dampfkraftwerk nach einem der Ansprüche 1 bis 5,
**dadurch gekennzeichnet,** daß eine supraleitende Spule (62) der Anlage (4) zur supraleitenden Energiespeicherung ein metallisches supraleitendes Material, etwa eine Niob-Titan-Legierung, umfaßt und über eine Leitung aus einem hochtemperatursupraleitenden Material an eine weiterführende normalleitende elektrische Leitung angeschlossen ist.

7. Dampfkraftwerk nach einem der Ansprüche 1 bis 6,
**dadurch gekennzeichnet,** daß die Anlage (4) zur supraleitenden magnetischen Energiespeicherung unahängig vom Kraftwerk (1) an einem Knotenpunkt des elektrischen Netzes (68) aufgestellt ist, und daß das Ventil (54, 60) in der Anzapfdampfleitung (52,58) des Kraftwerks (1) von der Kontrolleinheit (72) der Anlage (4) fernsteuerbar ist.

8. Dampfkraftwerk nach einem der Ansprüche 1 bis 6,
**dadurch gekennzeichnet,** daß die Anlage (4) zur supraleitenden magnetischen Energiespeicherung unabhängig vom Kraftwerk (1) an einem Knotenpunkt des elektrischen Netzes (68) aufgestellt ist, und daß das Ventil (54,60) in der Anzapfdampfleitung (52,58) des Kraftwerks (1) über eine eigene Kontrolleinheit im Kraftwerk (1) einstellbar ist.

9. Verfahren zum Betrieb eines Dampfkraftwerks mit einer einen elektrisch an einem Netz angeschlossenen Generator (2) antreibenden Dampfturbine (26, 28), insbesondere nach einem der Ansprüche 1 bis 8,
**dadurch gekennzeichnet,** daß ein im Sekundenbereich auftretendes Leistungsdefizit im Netz (68) mittels einer Kontrolleinheit (72) netzabhängig, d.h. abhängig von dem am Netz (68) erfaßbaren Leistungsdefizit, durch unmittelbare Bereitstellung von in einem supraleitenden magnetischen Energiespeicher (62) gespeicherter Energie ausgeregelt wird und daß zugleich mittels der Kontrolleinheit (72) ein Ventil (54,60) in einer Anzapfdampfleitung (52,58) zwecks Verstärkung des Dampfangebotes an der Dampfturbine (26,28) eingestellt wird.

10. Verfahren nach Anspruch 9,
**dadurch gekennzeichnet,** daß bei abnehmender netzseitiger Last das Ventil (54,60) in der Anzapfdampfleitung (52,58) zwecks Dampfentnahme eingestellt und der supraleitende magnetische Energiespeicher (62) mittels eines netzabhängig geregelten Umformers (66) aufgeladen wird.

11. Verfahren nach Anspruch 9 oder 10,
**dadurch gekennzeichnet,** daß der supraleitende magnetische Speicher (62), gesteuert von der Kontrolleinheit (72), bei überschüssiger Kraftwerksleistung maximal aufgeladen wird.

12. Verfahren nach einem der Ansprüche 9 bis 11,
**dadurch gekennzeichnet,** daß der supraleitende magnetische Speicher (62), gesteuert von der Kontrolleinheit (72), bei überschüssiger Kraftwerksleistung aufgeladen und bei unzureichender Kraftwerksleistung ins Netz (68) entladen wird.

13. Verbundnetz (68), an das eine Anzahl von Dampfkraftwerken (1a, 1b, 1c, ...) angeschlossen ist, wobei mindestens ein Dampfkraftwerk (1a, 1b, 1c, ...) ein mittels einer Kontrolleinheit (72) einstellbares und in einer Anzapfdampfleitung (52, 58) eingebautes Ventil (54a bis 54g) umfaßt, wobei mindestens einem Dampfkraftwerk (1a, 1b, 1c, ...) ein supraleitender magnetischer Speicher (62a, 62f) zugeordnet ist, wobei zur Ausregelung eines im Sekundenbereich auftretenden Leistungsdefizits mittels der Kontrolleinheit (72) unmittelbar elektrische Leistung aus dem supraleitenden magnetischen Speicher (62a, 62f) bereitstellbar ist, und wobei mittels der Kontrolleinheit (72) zur Vermehrung des Dampfangebotes an der Dampfturbine (26, 28) das Ventil (54a bis 54g) einstellbar ist.

14. Verfahren zum Betrieb des Verbundnetzes (68) nach Anspruch 13,
**dadurch gekennzeichnet,** daß bei Auftreten eines Leistungsdefizits, beispielsweise infolge Ausfalls eines der Dampfkraftwerke (1a, 1b, 1c, ...), der supraleitende magnetische Energiespeicher (62a) zwecks Einspeisung in das Verbundnetz (68) aktiviert wird, und daß zumindest annähernd gleichzeitig in einem der Dampfkraftwerke (1a, 1b, 1c, ...) eine Vermehrung des Dampfangebotes in den Dampfturbinen (26, 28), beispielsweise durch eine Vorwärmer-Abschaltung, eingestellt wird.

## Claims

1. A steam generating plant, comprising:
a) a steam turbine (26, 28) driving a generator (2);
b) a steam bleeder line (52, 58) connected to the steam turbine and having a load-dependently adjustable valve (54, 60);
c) a system (4) comprising a superconducting magnetic energy accumulator (62) which is electrically connected in parallel with the generator (2); and
d) a control unit (72),
wherein, in order to level out a power deficit of seconds duration occurring in a network (68) connected to the generator (2), by means of the control unit (72) electrical power can be furnished directly from the superconducting energy accumulator (62) and wherein at the same time the valve (54, 60) can be adjusted by means of the control unit (72) to make more steam available to the steam turbine (26, 28).

2. A steam generating plant according to claim 1, characterised in that the control unit (72) is designed so that, immediately after compensation for the power deficit, the electrical energy made available from the generator (2) as a result of the increased amount of steam made available can be fed into the energy accumulator (62).

3. A steam generating plant according to claim 1 or claim 2, characterised in that the superconducting magnetic energy storage system (4) includes a superconducting magnet coil (62) which is connected to the electrical network (68) via a network-dependently regulated converter (66) and a transformer (70).

4. A steam generating plant according to claim 3, characterised in that the superconducting magnetic energy storage system (4) includes the control unit (72) which adjusts the converter (66) as a function of the load in the electrical network (68) so as to level out the positive and negative power deficits, i.e. the power peaks and valleys in the network.

5. A steam generating plant according to one of claims 1 to 4, characterised in that the valve (54, 60) in the bleeder steam line (52, 58) is closable as a function of load peaks in the electrical network.

6. A steam generating plant according to one of claims 1 to 5, characterised in that a superconducting coil (62) in the superconducting energy storage system (4) includes a metallic superconducting material, e.g. a niobium-titanium alloy, and is connected via a line made of a high temperature superconducting material to an onward-leading line made of a normally-conducting material.

7. A steam generating plant according to one of claims 1 to 6, characterised in that the superconducting magnetic energy storage system (4) is disposed independently of the generating plant (1) at a node of the electrical network (68) and that the valve (54, 60) in the bleeder steam line of the generating plant (1) is remotely controllable by the control unit (72) of the system (4).

8. A steam generating plant according to one of claims 1 to 6, characterised in that the superconducting magnetic energy storage system (4) is disposed independently of the generating plant (1) at a node of the electrical network (68) and that the valve (54, 60) in the bleeder steam line of the generating plant (1) is adjustable by means of a control unit of its own in the generating plant (1).

9. A method for operating a steam generating plant comprising a steam turbine (26, 28) driving a generator (2) electrically connected to an electrical network, in particular according to one of claims 1 to 8,
characterised in that
a power deficit of seconds duration occurring in the electrical network (68) is levelled out by means of a control unit (72) operating in a network-dependent manner, i.e. as a function of a power deficit detectable in the electrical network (68), by directly furnishing energy stored in a superconducting magnetic energy accumulator (62), and that by means of the control unit (72) a valve (54, 60) in a bleeder steam line (52, 58) is adjusted to make more steam available to the steam turbine (26, 28).

10. A method according to claim 9, characterised in that when the load in the network decreases the valve (54, 60) in the bleeder steam line (52, 58) is adjusted to withdraw steam and the superconducting magnetic energy accumulator (62) is charged by means of a network-dependently regulated converter (66).

11. A method according to claim 9 or claim 10, characterised in that the superconducting magnetic energy accumulator (62), controlled by the control unit (72), is charged to the maximum extent when there is excess generating plant capacity.

12. A method according to one of claims 9 to 11, characterised in that the superconducting magnetic accumulator (62), controlled by the control unit (72), is charged when there is excess generating plant capacity and discharged into the network (68) when there is inadequate generating plant capacity.

13. An interlinking electrical network (68) to which a number of steam generating plants (1a, 1b, 1c,...) are connected, at least one of the steam generating plants (1a, 1b, 1c,...) including a valve (54a to 54g) incorporated in a bleeder steam line (52, 58) and adjustable by means of a control unit (72), at least one of the steam generating plants (1a, 1b, 1c,...) having a superconducting magnetic accumulator (62a, 62f) associated with it, wherein for the purpose of levelling out a power deficit occurring for a period of seconds electrical power can be furnished directly from the superconducting magnetic accumulator (62a, 62f) by means of the control unit (72), and wherein the valve (54a to 54g) can be adjusted by means of the control unit (72) to make more steam available to the steam turbine (26, 28).

14. A method for operating an interlinking network (68) according to claim 13, characterised in that in the event of a power deficit, for example due to failure of one of the steam generating plants (1a, 1b, 1c,...), the superconducting magnetic accumulator (62a) is activated to feed into the interlinking network (68), and that at least approximately simultaneously an adjustment is made in one of the steam generating plants (1a, 1b, 1c,...) to make more steam available to the steam turbines (26, 28), for example by means of a preheater-shutoff.

## Revendications

1. Centrale thermique à vapeur comportant
a) une turbine à vapeur (26,28) entraînant une génératrice (2),
b) une canalisation de soutirage de vapeur (52,58), qui est raccordée à la turbine à vapeur et qui comporte une vanne (54,60) réglable en fonction de la charge,
c) une installation (4) comportant un accumulateur (62) magnétique supraconducteur d'énergie branché électriquement en parallèle avec la génératrice (2), et
d) une unité de contrôle (72),
dans laquelle pour exclure par régulation un déficit de puissance, d'une durée de l'ordre de la seconde, d'un réseau (68) raccordé à la génératrice, de la puissance électrique provenant de l'accumulateur (62) supraconducteur d'énergie peut être mise à disposition directement, au moyen de l'unité de contrôle (72), et dans laquelle simultanément la vanne (54,60) peut être réglée au moyen de l'unité de contrôle (72) pour accroître la quantité de vapeur envoyée à la turbine à vapeur (26, 28).

2. Centrale thermique à vapeur suivant la revendication 1, caractérisée par le fait que l'unité de contrôle (72) est agencée de telle sorte qu'aussitôt après la compensation du déficit de puissance, l'énergie électrique de la génératrice (2), mise à disposition en raison de l'accroissement de la quantité de vapeur, peut être envoyée à l'accumulateur (62) d'énergie.

3. Centrale thermique à vapeur suivant la revendication 1 ou 2, caractérisée par le fait que l'installation (4) comprend, pour l'accumulation magnétique supraconductrice d'énergie, une bobine (62) magnétique supraconductrice, qui est reliée au réseau électrique (68) par l'intermédiaire d'un convertisseur (66) réglé en fonction du réseau et d'un transformateur (70).

4. Centrale thermique à vapeur suivant la revendication 3, caractérisée par le fait que l'installation (4) d'accumulation magnétique supraconductrice d'énergie comporte l'unité de commande (72), qui règle le convertisseur (66) en fonction de la charge dans le réseau électrique (68), en vue d'exclure par régulation des déficits positif et négatif de puissance, c'est-à-dire des pointes de charge et des creux de charge, qui apparaissent dans le réseau.

5. Centrale thermique à vapeur suivant l'une des revendications 1 à 4, caractérisée par le fait que la vanne (54,60) montée dans la canalisation (52,58) de soutirage de vapeur, peut être fermée en fonction de pointes de charge apparaissant dans le réseau.

6. Centrale thermique à vapeur suivant l'une des revendications 1 à 5, caractérisée par le fait qu'une bobine supraconductrice (62) de l'installation (4) d'accumulation supraconductrice d'énergie comprend un matériau métallique supraconducteur, par exemple un alliage de niobium-titane, et est raccordée, par l'intermédiaire d'une canalisation formée d'un matériau supraconducteur à haute température, à une ligne électrique normalement conductrice menant plus loin.

7. Centrale thermique à vapeur suivant l'une des revendications 1 à 6, caractérisée par le fait que l'installation (4) d'accumulation magnétique supraconductrice d'énergie est reliée, indépendamment de la centrale (1) à un noeud du réseau électrique (68) et que la vanne (54,60) située dans la canalisation (52,58) de soutirage de vapeur de la centrale (1) peut être télécommandée par l'unité de contrôle (72) de l'installation (4).

8. Centrale thermique à vapeur suivant l'une des revendications 1 à 6, caractérisée par le fait que l'installation (4) d'accumulation magnétique supraconductrice d'énergie est reliée, indépendamment de la centrale (1), à un noeud du réseau électrique (68), et que la vanne (54,60) située dans la canalisation (52,58) de soutirage de vapeur de la centrale (1) est réglable au moyen de sa propre unité de contrôle dans la centrale (1).

9. Procédé pour faire fonctionner une centrale thermique à vapeur comportant une turbine à gaz (26,28) entraînant une génératrice (2) raccordée électriquement à un réseau, notamment suivant l'une des revendications 1 à 8, caractérisé par le fait qu'un déficit de puissance, qui apparaît dans le réseau (68) pendant une durée de l'ordre de la seconde, est exclu par réglage en fonction du réseau, c'est-à-dire en fonction du déficit de puissance pouvant être détecté dans le réseau (68), par une mise à disposition immédiate d'énergie par un accumulateur (62) magnétique supraconducteur d'énergie, et qu'une vanne (54,60) montée dans la canalisation (52,58) de soutirage de vapeur est simultanément réglée au moyen de l'unité de contrôle (72) en vue d'accroître la quantité de vapeur envoyée à la turbine à vapeur (26,28).

10. Procédé suivant la revendication 9, caractérisé par le fait que lorsque la charge côté réseau diminue, la vanne (54,60) montée dans la canalisation (52,58) de soutirage de vapeur est réglée pour un prélèvement de vapeur, et l'accumulateur (62) magnétique supraconducteur d'énergie est chargé au moyen d'un convertisseur (66) réglé en fonction du réseau.

11. Procédé suivant la revendication 9 ou 10, caractérisé par le fait que l'accumulateur (62) magnétique supraconducteur est chargé au maximum, d'une manière commandée par l'unité de contrôle (68), dans le cas d'un excès de puissance de la centrale.

12. Procédé suivant l'une des revendications 9 à 11, caractérisé par le fait que l'accumulateur (62) magnétique supraconducteur est chargé d'une manière commandée par l'unité de contrôle (72), dans le cas d'un excès de puissance de la centrale et est déchargé dans le réseau (68), d'une manière commandée par l'unité de contrôle, dans le cas d'une puissance insuffisante de la centrale.

13. Réseau d'interconnexion (68), auquel sont raccordées plusieurs centrales thermiques à vapeur (1a,1b,1c,...), et dans lequel au moins une centrale thermique à vapeur (1a,1b, 1c,...) comprend une vanne (54a à 54g), qui est réglable au moyen d'une unité de contrôle (72) et est montée dans une canalisation (52,58) de soutirage de vapeur, un accumulateur (62a,62f) magnétique supraconducteur est associé à au moins une centrale thermique à vapeur (1a,1b,1c,...), de la puissance électriquement pouvant être mise à disposition immédiatement par l'accumulateur (62a,62f) magnétique supraconducteur, au moyen de l'unité de contrôle (72), pour exclure tout déficit de puissance apparaissant pendant une durée de l'ordre de la seconde, et la vanne (54a à 54g) étant réglable au moyen de l'unité de contrôle (72) pour accroître la quantité de vapeur envoyée à la turbine à vapeur (26,28).

14. Procédé pour faire fonctionner le réseau d'interconnexion (68) suivant la revendication 13, caractérisé par le fait que dans le cas de l'apparition d'un déficit de puissance, par exemple en raison de la défaillance de l'une des centrales thermiques à vapeur (1a,1b,1c,...), l'accumulateur (62a) magnétique supraconducteur d'énergie est activé de manière à alimenter le réseau d'interconnexion (68), et que, dans l'une des centrales thermiques à vapeur (1a,1b,1c,...), au moins approximativement simultanément un accroissement de la quantité de vapeur envoyée aux turbines à vapeur (26,28) est réglé, par exemple par débranchement d'un dispositif de chauffage préalable.
